# EUROPEAN PATENT APPLICATION

(11) **EP 4 779 150 A1**
(43) Date of publication of application: **22.07.2026**
(21) Application number: 25151897.3
(22) Date of filing: 15.01.2025
(51) Int. Cl.: F03D 80/80, H02G 3/32

(54) **SYSTEM FOR HANDLING A POWER CABLE OF A WIND TURBINE AND WIND TURBINE**

(71) Applicant: Siemens Gamesa Renewable Energy A/S, 7330 Brande (DK)
(72) Inventor: Arunachalmath, Gururaj, 591102 Bailhongal (IN); Damgaard, Torben Reuss, 7400 Herning (DK); Larsen, Jesper, 7100 Vejle (DK); Shetty, Prabhakar Pradeep, 560036 Bangalore (IN); Sigvartsen, Martin, 7100 Vejle (DK); Yenagandula, Venkatesh, 504001 Adilabad (IN)
(74) Representative: SGRE-Association

(57) **Abstract**

The present invention relates to a system (100) for handling a power cable (60) of a wind turbine comprising a cable support arrangement (20) adapted to support a portion of the power cable (60) and at least one guiding arrangement (10) being fixedly connectable or connected to at least one structure (51) within a wind turbine tower (50) and adapted to guide the cable support arrangement (20) along a linear track (12) provided by at least one guide rail (11). Furthermore, a wind turbine comprising the system (100) is disclosed.

The disclosed system (100) for handling a power cable (60) is advantageous for improved operational safety, requires less installation space within the wind turbine tower (50) and provides improved operational flexibility.

## Description

The present invention relates to a system for handling a power cable of a wind turbine and to a wind turbine comprising a system for handling a power cable.

Wind turbines typically comprise a nacelle mounted on a tower, within which a generator converts mechanical energy from the rotation of a rotor into electrical energy. This energy is transmitted through a power cable that runs down the length of the tower and is connected to either an offshore or underground cable, which delivers the electricity to the utility grid.

In conventional cable installation processes, the installation of power cables inside the tower occurs at a pre-installation location, such as a harbor or assembly site, before the wind turbine is deployed to its final operational location, often offshore. Traditionally, a hoist located at the top of the tower is employed to pull the cable upward from a reel positioned at the base of the tower.

To ensure sufficient cable length for connecting components within the nacelle once it is installed, and to account for any future reconnections during the turbine's service life, additional cable length is required. This excess length must be stored during transport to the installation site, particularly in offshore environments, where the surplus cable is often coiled and stored at the topmost platform inside the tower.

For some offshore turbine designs, an extended length of high-voltage cable may need to be pulled and stored at the base of the tower at the pre-assembly stage, to ensure it is properly secured for transport. Upon arrival at the installation site, the excess cable must be carefully routed down into the foundation or transition piece, where the wind turbine tower will be mounted. It is also necessary to connect the cable end to a switchgear unit, which may be located within the foundation or transition piece.

Given the substantial mass of power cables manual handling of the cable is impractical. As a result, mechanical systems are typically used to pull the cable into position. Additionally, such mechanical systems are beneficial to facilitate the replacement of the cable or switchgear in case of any operational failures during the turbine's lifetime.

WO 2023/072609 A1 discloses a system for handling power cables, particularly for offshore wind turbines, including transportation, connection to switchgear, and reconnection. The system comprises a cable support arrangement, in particular designed as a halfwheel, which supports a portion of the power cable while ensuring the cable maintains the required minimum bending radius. The cable support arrangement has a curved surface that cradles the cable and locks it in place, preventing damage during movement and handling. The cable support arrangement is coupled to a guiding system that is attached to at least one platform within the wind turbine tower and uses two parallel linear rails along which the cable support arrangement is moveable. This setup enables vertical movement of the cable support system along a defined track, allowing the lifting or lowering of the power cable for various operational stages, such as installation or reconnection of the power cable. The guiding system can in particular pass through platform floors, positioning the cable support system above or below the floor as needed.

Although this system represents a considerable improvement over conventional cable laying, it still has disadvantages, especially in terms of safety and operating efficiency.

A major safety concern is the attachment of the cable support arrangement to the guide system. If the cable support arrangement were to become disengaged from a hoist or otherwise malfunction, there is a risk that the cable support arrangement could fall free during vertical movement. This could lead to severe safety hazards, particularly during maintenance or installation operations where personnel are nearby. Additionally, if the cable support arrangement falls, it could cause damage to the power cable or other components within the tower, leading to costly repairs and potential downtime.

The cable support arrangement's attachment to two parallel guide rails presents a drawback in terms of flexibility. The fixed linear rails limit the cable support arrangement to only vertical movements along a strict path, reducing adaptability to varying installation scenarios or cable configurations. Moreover, the use of two parallel rails is space-consuming, especially in the confined environment of a wind turbine tower. The additional structure for the rails takes up space that could be used for other equipment, increasing installation complexity and reducing the available working area within the tower.

Therefore, it is one object of the present invention to provide an improved system for handling a power cable of a wind turbine that is optimized in terms of safety and/or operating efficiency.

It is an additional object of the invention to provide an improved wind turbine.

According with a first aspect of the invention, a system for handling a power cable of a wind turbine is provided.

The system for handling a power cable of a wind turbine comprises a cable support arrangement adapted to support a portion of the power cable and at least one guiding arrangement being fixedly connectable or connected to at least one structure within a wind turbine tower and adapted to guide the cable support arrangement along a linear track provided by at least one guide rail.

In an installed state of the system at the least one structure within a wind turbine tower the linear track may in particular run essentially along the longitudinal axis of the wind turbine tower. In other words, the linear track may extend essentially vertically.

In its installed state, the system for handling a power cable according to the invention may be entirely situated within a wind turbine tower. The cable support arrangement may comprise one or more components designed to support and/or secure a section of the power cable, wherein the cable support arrangement shall specifically comply with a minimum bending radius of the power cable. Furthermore, the cable support arrangement may be configured to accommodate a curved segment of the power cable, particularly one that takes the form of a circular segment, such as a semicircle, with angles ranging between 90 and 180 degrees.

The cable support arrangement may include one or more contact surfaces that allow for contact with and/or provide support to specific sections of the power cable. Additionally, the system may incorporate one or more locking members that function to securely fasten the power cable to the cable support arrangement once it is in place. The one or more locking members may comprise a cable clamp arranged at the cable support arrangement that can be tightened once the power cable is positioned at the desired position on the cable support arrangement.

The cable support arrangement itself may, for instance, feature a groove or groove-like sections, which may extend in a curved formation, particularly adopting a substantially circular configuration, intended to support the power cable when positioned within the groove. During operation of the system, the power cable may be directed along the groove of the cable support arrangement, ensuring proper alignment and stability.

The cable support arrangement may in particular comprise a halfwheel assembly, wherein the power cable can be supported at an outer circumference of the halfwheel assembly. A groove or groove-like structures of the cable support arrangement may be provided at one or more rollers or wheels which may allow to guide the power cable along the groove during handling the power cable. In embodiments the halfwheel assembly may comprise a plurality of rollers or wheels that are arranged on a circle segment.

The power cable may, for instance, be a high-voltage cable designed to transmit electrical power at voltages ranging from 1 kV to 100 kV, or more specifically between 10 kV and 80 kV. The cable conductors may have a diameter between 50 mm and 200 mm. The minimum bending radius may fall between 300 mm and 2000 mm.

According to an important embodiment of the invention the cable support arrangement may be coupled to the guiding arrangement in a pivotable manner, in particular wherein the cable support arrangement is pivotable about a swiveling axis extending parallel to the extension of the linear track.

When looking at an installed state of the system, the swiveling axis may extend essentially parallel to the longitudinal axis of the wind turbine tower or, in other words, along the vertical direction.

Said pivotability about the swiveling axis is beneficial as it allows the cable support arrangement to be pivoted to a position in that it does not interfere with structures within the wind turbine tower and/or technical personnel when works are being carried out inside the wind turbine tower. In other words, the pivotability adds flexibility to the system as it allows the cable support arrangement to be pivoted to any desired position which gives technical personnel substantially more room for maneuver in the confined space of the wind turbine tower.

In addition, the increased flexibility of the system, mainly due to the pivoting cable support arrangement, allows more than one system to be installed to manage a power cable inside the wind turbine tower. For example: Within a given installation space that was required to install one power cable handling system according to the state of the art, two or more power cable handling systems according to the invention can be installed. This helps to significantly reduce the time required to install and/or reconnect power cables.

In another embodiment, the guiding arrangement may comprise exactly one guide rail, in particular wherein the guide rail is connectable or connected to an inner wall of the wind turbine tower. Herein, the linear track may have an extension essentially along the longitudinal axis of the wind turbine tower.

In embodiments, the cable support arrangement may be coupled to the guide system on one side only, while an opposite side of the cable support arrangement constitutes a free end. In an installed state, the free end of the cable support arrangement may in particular protrude with a radial component to an inner side of the wind turbine tower, wherein the radial reach can be adapted by pivoting the cable support assembly about the swiveling axis.

A further advantage of using only one guide rail instead of two guide rails is that the installation space of the guiding system is significantly reduced. This in particular allows to install a plurality of systems for handling a power cable within a wind turbine tower which may become particularly important as wind turbine's electric capacities constantly rise so that more than one power cable may be required to facilitate the electrical connections.

According to a further embodiment, the guiding arrangement may comprise at least one slider assembly coupled to the guide rail and being movable along the extension of the linear track, wherein the slider assembly may comprise at least one joint arrangement to that the cable support arrangement is hinged. In particular, said joint arrangement may provide a degree of rotational freedom for the cable support arrangement about the swiveling axis. The joint arrangement may provide exactly one degree of freedom of movement, namely a degree of rotational freedom about the swiveling axis.

The slider assembly together with the guide rail forms a rail guide that allows movement of the slider assembly along the linear track. The slider assembly can comprise one or more sliding shoes, in particular comprising a plastic material like Polyoxymethylene (POM), Polytetrafluorethylen (PTFE) or a polyamide. In other embodiments the sliding shoes can comprise metals as well, such as steel or certain non-ferrous metals, brass for example. Alternatively or additionally the slider assembly can comprise one or more wheels that are adapted to roll on respectively in the guide rail and allow for particularly low-friction movement along the guide rail.

In embodiments, the slider assembly may be guided inside a cross-section of the guide rail, wherein the guide rail may in particular have an essentially C-shaped cross-section. Internal guidance of the slider assembly is both beneficial for installation space and safety reasons. However, the invention is not limited to internal guidance, but also explicitly covers external guidance of the slider assembly on the guide rail.

The C-shaped cross-section of the guide rail can in particular have at least one collar at an open side of the 'C' so that the slider assembly is not unintentionally decoupled from the guide rail.

According to a further embodiment, the system may comprise a hoist at one end connectable to a relatively stationary location at the wind turbine tower, e.g. a hoisting beam arranged at the inner tower wall, and at another end connectable to at least one holding location (lifting point) at the cable support arrangement. Additionally or alternatively the other end of the hoist may be connectable to the slider assembly. Said hoist is in particular configured to selectively lift or lower the cable support arrangement along the linear track provided by the at least one guide rail.

The hoist may be operated by a motorized hoist drive device, in particular comprising an electric motor. The hoist drive device may in particular comprise a battery-powered rope drive.

According to another embodiment the cable support arrangement may be pivotable between a swiveled-in position and a swiveled-out position. In an installed state of the system at the least one structure within a wind turbine tower the cable support arrangement may be in particular located closer to the inner tower wall of the wind turbine tower in the swiveled-out position than in the swiveled-in position. Between the swiveled-out position and the swiveled-in position the cable support arrangement may be pivoted to any intermediate angle.

The degree of rotational freedom for the cable support arrangement about the swiveling axis between the swiveled-in position and the swiveled-out position can comprise 45° - 90°, depending on the dimensions of the cable support system and the tower radius. When the system is not needed for cable lifting purposes the cable support arrangement may be pivoted to its swiveled-out position in that it is located close to the tower wall so that as much of the tower cross-section as possible is available for other works to be carried out within the tower.

According to yet a further embodiment the joint arrangement may comprise at least two first hinge components arranged at a slider base body of the slider assembly with a predetermined spacing along an extension of the linear track. The cable support arrangement may comprise corresponding second hinge components that are coupled with the first hinge components.

For example, the first hinge components may comprise swivel pins arranged at the slider base body and the second hinge components may comprise corresponding bores at the cable support arrangement in which the swivel pins are received. The invention explicitly not only covers a kinematic inversion of this principle but also other joint types that provide the required degree of rotational movement as well.

In embodiments, the cable support arrangement may be held on the swivel pins at the slider assembly by gravity when the system is in an installed state. Alternatively or additionally the cable support arrangement may be secured to the swivel pins by at least one locking element provided on the swivel pin, e.g. a lock nut and/or a safety pin.

In another embodiment, the guiding arrangement may comprise a multitude of fixation brackets arranged along the extension of the linear track, wherein the fixation brackets are adapted to connect the guide rail to the inner tower wall. Advantageously, at least one fixation bracket may provide a floating connection for the guide rail and at least one guiding bracket may provide a fixed connection for the guide rail. Alternatively or additionally at least one fixation bracket may include a cable clamp adapted to clamp the power cable to the at least one fixation bracket. It may be beneficial that a plurality of fixation brackets includes cable clamps to allow for an efficient routing of the power cable along the linear track.

The combination of at least one fixation bracket providing a fixed connection between the guide rail and the wind turbine tower and at least one fixation bracket providing a floating connection between the guide rail and the wind turbine tower allows the guiding system to compensate for bending movements of the tower that especially occur under strong wind loads. In other words, this design counteracts tensions that would otherwise occur in the guide rail and that could lead to mechanical damage of the latter. The at least one fixation bracket providing the floating connection especially allows the guide rail to be displaced along the linear track against a relatively stationary connection location of the respective bracket at the wind turbine tower. In embodiments, the guide rail may be connected to the inner wall of the wind turbine tower by exactly one fixation bracket providing a fixed connection and a plurality of fixation brackets providing a floating connection. In other words, the combination of floating connection brackets and a fixed connection bracket provides a fixed/float bearing arrangement for the guide rail at the inner tower wall.

For example, the cable clamp can be attached at a base plate of the fixation bracket, wherein a fixation of the base plate at the tower wall, e.g with one or more bolts, both connects the fixation bracket and the cable clamp to the tower. By providing the fixation brackets with cable clamp the installation time for routing the power cable along the linear track can be significantly reduced.

According to a further important embodiment, the guiding arrangement may comprise at least one fall-arrester device adapted to engage the guide rail in the event of an accidental fall of the cable support arrangement so that the fall is stopped or at least slowed down.

This aspect of the invention represents a significant improvement in operational safety as it prevents the cable support arrangement from free falling, for example in the case of a malfunction of the hoist. The main function of the fall-arrester device is to decelerate and ultimately stop the accidental fall of the cable support system, effectively preventing damage to machinery and/or personnel.

The fall-arrester device can be based on different working principles, e.g. friction locking and/or form-fit respectively positive locking. In embodiments, the fall-arrester device may comprise a friction brake.

According to another embodiment, the guide rail may comprise a plurality of recesses spaced apart along the extension of the linear track, the recesses providing engagement means for the fall-arrester device.

The recesses may penetrate the guide rail, i.e. form through-openings, or be provided in the form of depressions that do not penetrate the guide rail. The recesses in particular can be provided in the form of slots. The term "slot" in particular means a slit-shaped structure having a generally rectangular shape, wherein in particular a long axis of the rectangular shape runs parallel to an extension of the linear track. However, the recesses can explicitly have other shapes as well, e.g. circular shapes or polygonal shapes. The purpose of the recesses is to provide form-fit locking surfaces for a corresponding component of the fall-arrester device to engage sequentially in adjacent recesses as the cable support arrangement is moved along the linear track provided by the guide rail.

According to yet a further embodiment, the plurality of recesses may be arranged in at least two laterally spaced rows at the guide rail, wherein recesses of a first row of recesses and recesses of a second row of recesses are provided with a predetermined offset along the extension of the linear track.

In particular, the recesses of the first row of recesses and the recesses of the second row of recesses may be provided with an identical pitch, i.e. with the same spacing along the extension of the linear track. The absolute position of the recesses of the first row of recesses and the recesses of the second row of recesses at the guide rail may however be different so that the recesses of the first row of recesses may be arranged at positions along the linear track at that the second row of recesses does not have recesses. In embodiments, the offset may be chosen so that there is no overlap with respect to the extension of the linear track between the recesses of the first row of recesses and the recesses of the second row of recesses. In other embodiments a certain degree of overlap, e.g. 10% to 40%, with respect to the extension of the recesses along the linear track may be provided between the recesses of the first row of recesses and the recesses of the second row of recesses.

The recesses of the two laterally spaced rows of recesses each provide form-fit locking surfaces for a corresponding component of the fall-arrester device to engage sequentially in adjacent recesses as the cable support arrangement is moved along the linear track provided by the guide rail. For this purpose, the fall-arrester device can have a first corresponding component adapted to engage in the recesses of the first row of recesses and a second corresponding component engaging in the recesses of the second row of recesses. This setup further increases the operational safety as it adds redundancy to the system and/or allows to minimize the distance the cable support arrangement can accidentally fall until the fall-arrester device ultimately stops or at least decelerates the fall.

In another embodiment, the fall-arrester device may be arranged at the slider assembly and may comprise at least one latching member that engages into the spaced apart recesses at the guide rail as the slider assembly is moved along the extension of the linear track. In a preferred embodiment, the fall-arrester device may comprise at least two laterally spaced apart latching members that engage into the recesses of the at least two rows of recesses as the slider assembly is moved along the extension of the linear track, wherein preferably always at least one latching member is engaged in at least a recess of the first and/or second rows of recesses.

The latching member may in particular comprise a latching plate that can, for example, have a cam shape and be provided with a width that allows the latching plate to be received in the recesses at the guide rail. The latching member can in particular be pre-tensioned by at least one spring so that it engages passively in the recesses, i.e. without external application of force. Further, the latching member may be pivotably mounted on at least one shaft at the slider base body, wherein the at least one spring can be a torsional spring that generates a preload torque that is transmitted to the latching member. The torsional spring may be supported at one end at the slider base body and at another end at a portion of the latching member.

In the case of the fall-arrester device comprising two or more latching members, both latching members may be pivotably mounted on the same shaft. Each latching member may in particular comprise an individual spring that generates said preload torque.

According to yet a further embodiment, the fall-arrester device may comprise a delatching member adapted to transfer the at least one latching member into an inactive state in that the slider assembly can be moved along the extension of the linear track without the at least one latching member engaging the recesses. The delatching member may in particular be activable through a remote delatching device, in particular comprising an elongated element like a rope, cable or the like. The remote delatching device allows convenient activation of the delatching member regardless of the current position of the slider assembly respectively the cable support system on the linear track. For example, the remote delatching device may have a total length that equals or even exceeds a total length of the guide rail so that personnel can, at any time, safely activate the delatching element from a remote location without the need to climb the tower, e.g. from on a lowermost platform of the wind turbine.

The delatching member may in particular be pivotably mounted on the same shaft as the latching member(s), wherein a mechanical link between the delatching member and the latching member(s) allows to transmit a delatching force to the latching member(s) that counteracts the preload force and/or torque provided by the spring associated with a respective latching member.

In an installed state of the system, the delatching member may in particular be used to inactivate the latching member(s) when the slider assembly, respectively the cable support arrangement, is to be lowered whereas lifting is preferably done with the latching member(s) in an active state.

A further aspect of the invention relates to a wind turbine comprising a wind turbine tower, a power cable and a system for handling a power cable according to the first aspect of the invention arranged inside the tower with the linear track running essentially along a longitudinal axis of the tower.

The wind turbine may comprise at least one platform arranged within the tower, wherein the platform may provide installation space for electrical systems such as a switchgear unit. The guide rail of the guiding arrangement of the system for handling a power cable may be arranged at a corresponding structure within the tower such that it traverses the at least one platform in the longitudinal direction. In other words, the guide rail can be arranged such that a first portion of the guide rail is arranged above the platform and a second portion of the guide rail is arranged below the platform. This allows power cables to be conveniently lifted from a position below the platform to a position above the platform and to lower power cables from a position above the platform to a position below the platform.

According to an embodiment, the at least one guide rail of the guiding arrangement of the system for handling a power cable may be connected to an inner wall of the wind turbine tower.

Connecting the guide rail to the inner wall of the wind turbine tower has the advantage that the limited installation space on the platform(s) is not occupied by fixing components of the guide arrangement to it. This gives personnel more room to maneuver on the platform(s) when carrying out installation and/or maintenance on the platforms. This especially applies if the cable support arrangement is pivoted into its swiveled-out position in that a maximum of free space can be provided on the platform(s).

In accordance with a further embodiment, the wind turbine may comprise two or more systems for handling a power cable, wherein the respective guide rails of the guiding arrangements are placed with a predetermined spacing along a circumferential direction at the inner wall of the wind turbine tower.

The cable support arrangements of the two or more systems for handling a power cable can in particular have different dimensions, in particular different lengths, so that the cable support arrangements of the two or more systems for handling a power cable in particular allow for different radial reaches to the inside of the tower. This is especially beneficial for connecting electrical systems distributed over the platform(s) in an efficient way. In combination with the pivotable coupling between the cable support arrangement and the guiding arrangement the system according to the invention allows for an overall improved efficiency for all power cable installation and/or reconnection tasks to be performed within the tower. In particular, the increased flexibility of the system makes it possible to speed up these tasks significantly, which in turn reduces installation and/or maintenance costs.

Any embodiment of the first aspect may be combined with any embodiment of the second aspect and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an isometric view of a system for handling a power cable of a wind turbine;
Fig. 2 shows a top view of the system for handling a power cable of a wind turbine;
Fig. 3 shows a partial view of Fig. 2, in particular showing the pivotability of the halfwheel assembly;
Fig. 4 shows a further isometric view of a system for handling a power cable of a wind turbine with a power cable;
Fig. 5 shows detail A according to Fig. 4;
Fig. 6 shows an isometric view of a fixation bracket, in particular a floating fixation bracket;
Fig. 7 shows a partial view of Fig. 1;
Fig. 8 shows a top view of the system for handling a power cable of a wind turbine with (final) locking brackets;
Fig. 9a- show isometric views of installation steps of the
Fig. 9d cable support arrangement at the guiding arrangement;
Fig. 10 shows a further isometric view of a system for handling a power cable of a wind turbine with a hoist;
Fig. 11 shows a further isometric view of a system for handling a power cable of a wind turbine with two platforms inside the tower;
Fig. 12 shows a different isometric view of a system for handling a power cable of a wind turbine from a back
   side;
Fig. 13 shows Detail B according to Fig. 12;
Fig. 14 shows Detail B according to Fig. 12 (guide rail hidden), showing in particular the function of the fall-arrester device;
Fig. 15 shows an isometric view of a slider assembly from a front side;
Fig. 16 shows a rear view of the slider assembly;
Fig. 17 shows cross-section A-A of Fig. 16;
Fig. 18 shown Detail C according to Fig. 16;
Fig. 19 shows cross-section N-N of Fig. 18;
Fig. 20 shows an isometric view of a slider assembly from a rear side;
Fig. 21 shows an exploded view of Fig. 20;
Fig. 22 shows a further top view of the system for handling a
   power cable;
Fig. 23 shows cross-section C-C according to Fig. 22, in particular showing one of the latching members;
Fig. 24 shows cross-section F-F according to Fig. 22, in particular showing the delatching member;
Fig. 25 shows cross-section E-E according to Fig. 22, in particular showing one of the latching members;
Fig. 26 shows yet a further top view of the system for handling a power cable; and
Fig. 27 shows cross-section G-G according to Fig. 26, in particular showing details of the remote delatching device.

In the Figures, like reference numerals designate like or functionally equivalent elements, unless otherwise indicated.

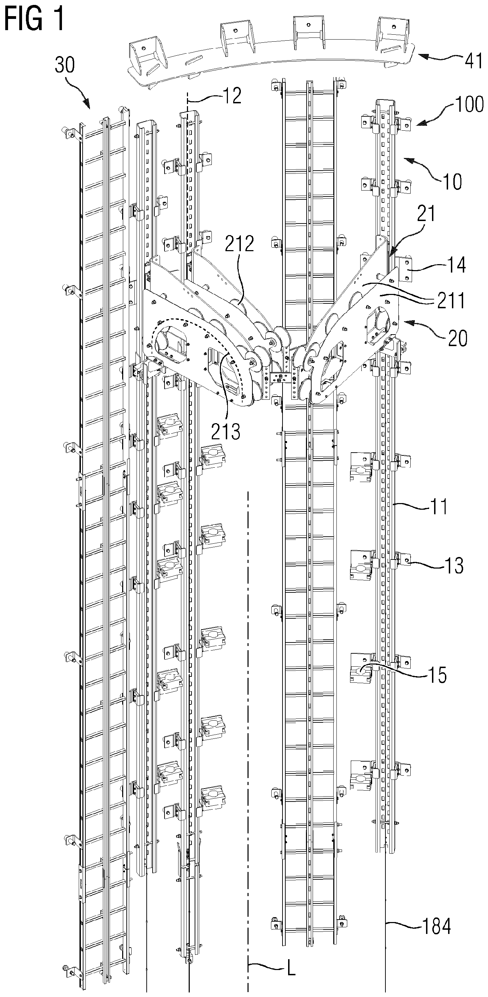

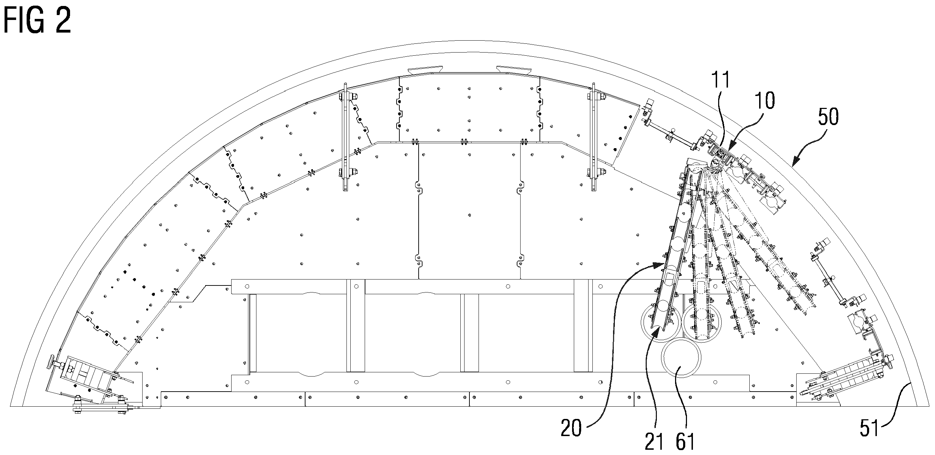

**Fig. 1** shows an isometric view of three systems 100 for handling a power cable of a wind turbine according to the invention in their installed state within a wind turbine tower. The systems 100 each comprise a cable support arrangement 20 adapted to support a portion of a power cable and a guiding arrangement 10 being fixedly connected to at least one structure within the wind turbine tower. The guiding arrangement 10 is adapted to guide the cable support arrangement 20 along a linear track 12 provided by at least one guide rail 11. The guide rail 11 in a particular extends along a longitudinal axis L of the tower and may span over a length of, for example, 5 m to 15 m, in particular around 9 m. The guide rail 11 is connected to an inner wall of the wind turbine tower (see Fig. 2) by means of a plurality of fixation brackets 13,14 that are provided in a spaced manner along the extension of the linear track 12. One of the fixation brackets 14 provides a fixed connection for the guide rail 11 while the other fixation brackets 13 provide a floating connection for the guide rail 11. The combination of fixed and floating fixation brackets 13,14 has the advantage that bending movements of the tower can be compensated so that the guide rail is not damaged by excessive tension and/or cyclical loads.

The guiding arrangements 10, respectively the guide rails 11, of the three systems 100 are mounted to the inner wall of the tower with a predetermined spacing along a circumferential direction.

At least some of the fixation brackets 13,14 comprise integrated cable clamps 15 to that the power cable may be clamped, for example after it has been moved to its final position with the respective cable support arrangements 20 of the systems 100.

The cable support arrangement 20 comprises a halfwheel assembly 21 that provides at least one contact surface to support and/or secure a power cable thereto. Specifically, the halfwheel assembly 21 has a plurality of distributed support surfaces that are arranged on a circle segment 213.

The radius of the circle segment 213 is selected so that a minimum bending radius of the power cable is respected. More specifically, the halfwheel assembly 21 comprises a plurality of rollers or wheels 212 that are arranged on the circle segment 213 with a predetermined spacing. The rollers or wheels 212 make it possible to move a power cable resting on them with ease, as friction is minimized. The support surface(s) for the power cable provided by the halfwheel assembly 21 may, for example, span over an angle of 90° to 180°. The rollers or wheels 212 may comprise a groove or a groove-like structure that is adapted to the outer diameter of the power cable so that the power cable can be safely guided on the rollers or wheels 212 without unintentionally slipping off.

The rollers or wheels 212 may each be rotatably mounted on a respective shaft that is held between two backing plates 211 of the halfwheel assembly 21. Seen in a radial direction of the circle segment 213, the backing plates 211 extend radially outwardly beyond the rollers or wheels 212 so that additional guidance for the power cable is provided thereby.

In other embodiments that are not shown in the Figures the halfwheel assembly may be provided without rollers or wheels 212 and may instead have at least one contact surface for the power cable that can equipped with a low-friction material, e.g. a plastic material, PTFE or POM for example.

In order to install, reconnect or otherwise manipulate a power cable with the system 100 according to the invention the cable support arrangement 20 comprising the halfwheel assembly 21 is moved, i.e. either lowered or raised, along the linear track 12 on the guide rail 11. The cable support arrangement 20 comprising the halfwheel assembly 21 may be moved along the linear track 12 on the guide rail 11 by a hoist that can be attached to a hoisting beam 41. The hoisting beam 41 may be arranged at the inner tower wall as well and provides support for a hoisting device at one or more hoisting points. The hoisting beam 41 can be in particular arranged above the top end of the guide rail 11.

Next to at least one guide rail 11 a ladder module 30 may be mounted to the tower wall that personnel can climb, for example when installing the system 100 or in case of malfunctions.

The cable support arrangement 20 is pivotable about a swiveling axis extending parallel to the extension of the linear track 12 which allows a free end of the cable support arrangement 20, respectively the halfwheel assembly 21, to reach different positions within the cross-section of the wind turbine tower. In addition, the pivotability of the cable support arrangement 20, respectively the halfwheel assembly 21, allows a cable support arrangement 20 of a specific system 100 to be pivoted to positions in that it does not interfere with cable support arrangements 20, respectively halfwheel assemblies 21, of further systems 100 and/or with other structures within the wind turbine tower and/or with personnel.

Unlike known systems for handling a power cable of a wind turbine, the cable support arrangement 20 of the system 100 according to the invention is guided on exactly one guide rail 11 and not at two spaced guide rails which allows both a reduction of installation space and is of great importance for the implementation of the pivotability feature. In other words, the cable support arrangement 20 is held at the guiding arrangement 10 only on one side, while the other side is a "free end" protruding to the inner side of the tower.

As a result, the system 100 according to the invention is advantageous both in terms of reduced use of installation space and in terms of increased operational flexibility and efficiency.

In **Fig. 2** the system 100 is shown in a top view with a second platform 91 of the wind turbine tower underneath. The second platform 91 comprises switchgear unit ports 61 to that a power cable is to be connected. In Fig. 2 both the connection of the guiding system 10 to the inner wall 51 of the wind turbine tower 50 and the pivotability of the cable support arrangement 20, comprising the halfwheel assembly 21, is visible.

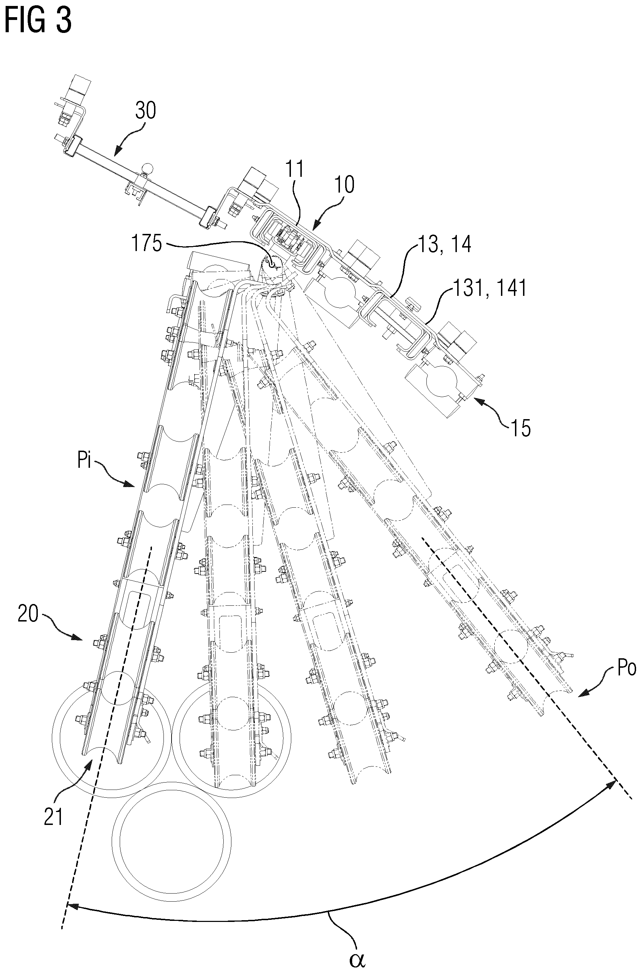

Now referring to **Fig. 3** that shows a partial view of Fig. 2. The cable support arrangement 20 is shown in various pivoting states between a swiveled-in position Pᵢ and a swiveled-out position Pₒ. The degree of rotational freedom between the swiveled-in position Pᵢ and a swiveled-out position Pₒ is marked with α. In the swiveled-out position Pₒ the cable support arrangement is located closer to the inner wall of the tower than in the swiveled-in position Pᵢ. Pivoting the cable support arrangement 20 to its swiveled-out position Pₒ gives personnel more room to maneuver on the platform 91 when carrying out installation and/or maintenance tasks. The cable support arrangement 20 of a specific system 100 can be in particular pivoted to its swiveled-out position Pₒ when other systems 100 are being operated for cable installation, relocation and/or reconnection purposes.

Further, in Fig. 3 the fixation brackets 13,14 connecting the guide rail 11 to the inner wall of the tower 50 are shown in a different view: The fixation brackets 13,14 comprise a passage opening through that the guide rail 11 extends, wherein two spaced bars extending on a radial inner side (with respect to the longitudinal axis L of the tower 50) hold the guide rail 11 in the radial direction at the respective fixation bracket 13,14. The fixation brackets 13,14 each comprise a base plate 131,141 that provides a bolting interface to the tower wall and hold the cable clamp 15.

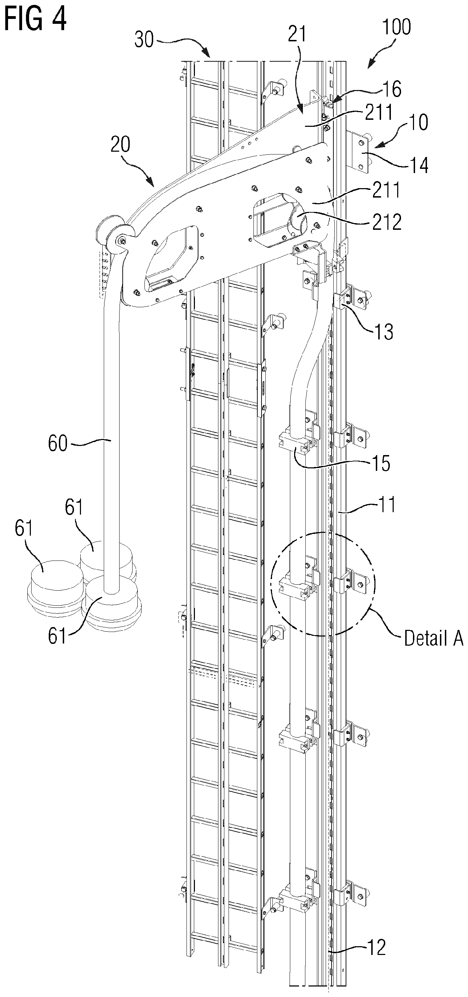

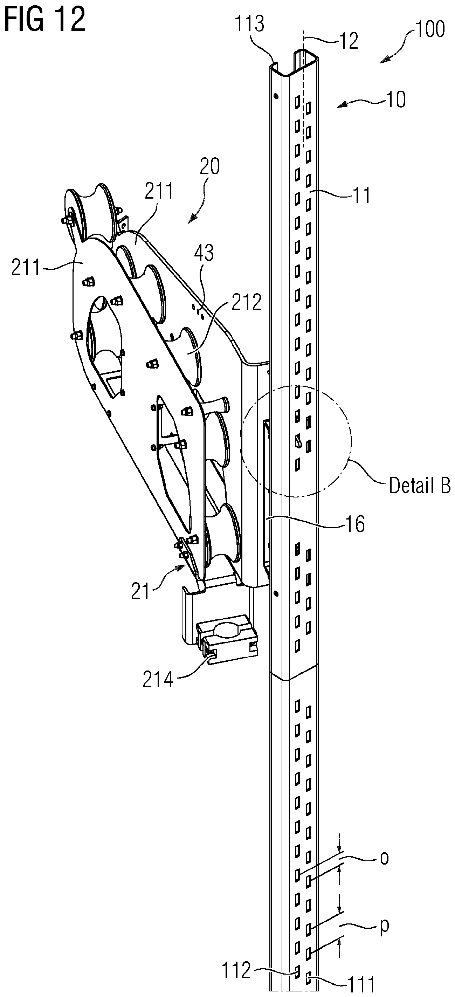

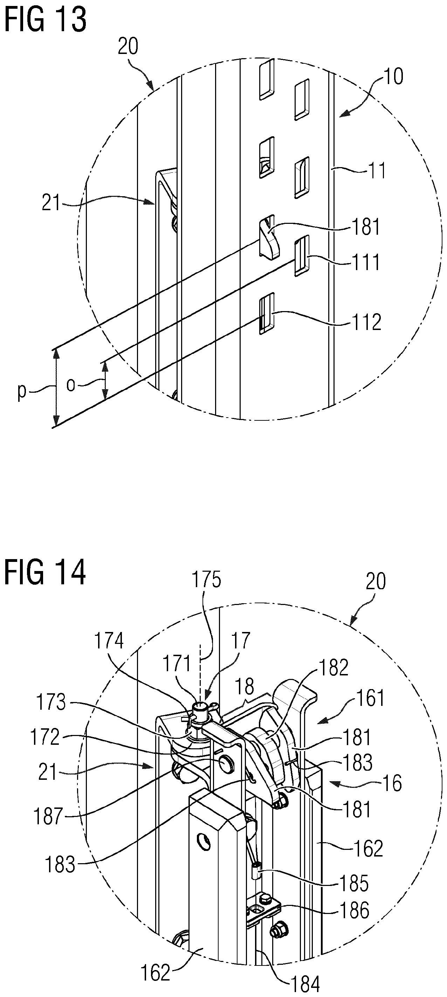

**Fig. 4** shows the system 100 with a power cable 60 in its final installation position. The power cable 60 is connected to switchgear unit ports 61 and guided over the cable support arrangement 20 where it rests on contact surfaces provided by the rollers or wheels 212 of the halfwheel assembly 21. The power cable 60 is routed downwardly along the extension of the linear track 12 provided by the guide rail 11 and secured at respective cable clamps 15 integrated to the fixation brackets 13,14. Fig. 4 also shows a slider assembly 16 coupled to the guide rail 11 and being movable along the extension of the linear track 12. The slider assembly 16 comprises at least one joint arrangement 17 (see Fig. 14) to that the cable support arrangement 20, in particular the halfwheel assembly 21, is hinged. The pivotability of the cable support arrangement 20 is in particular provided by said joint arrangement 17. The slider assembly 16 is guided inside the guide rail 11 that has an essentially C-shaped cross-section. With respect to the longitudinal direction, the cable support arrangement 20 may be coupled to the slider assembly 16 in a relatively stationary manner so that the slider assembly 16 moves along the extension of the linear track 12 when the cable support arrangement 20 is moved and vice versa. The detail structure, functions and advantages of the slider assembly 16 will be described with reference to Fig. 12 and the following Figures below.

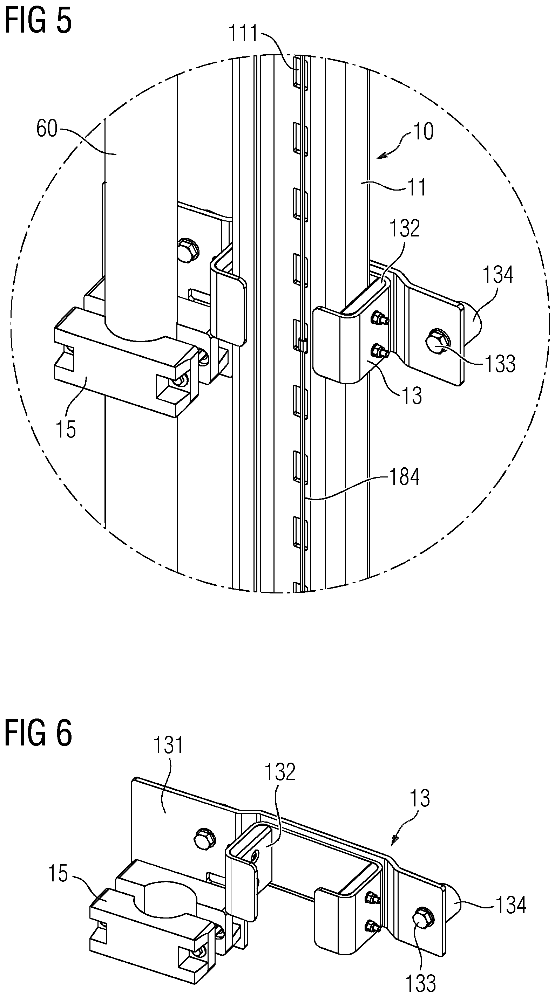

Now referring to **Fig. 5** that shows detail A according to Fig. 4 and to **Fig. 6** that shows a shows an isometric view of a floating fixation bracket 13. The fixation bracket 13 is connected to a base plate 131 that has two laterally spaced bores that form bolting interfaces to the tower wall. The base plate 131 may be mounted with a predefined radial spacing from the tower wall with a number of bolts 133 and spacer sleeves 134. The fixation bracket 13 is arranged at the base plate 131 as well as the cable clamp 15. Within the passage opening of the fixation bracket 13 through that the guide rail 11 extends, two gliding elements 132 are arranged at opposing sides. The gliding elements 132 allow for a low-friction linear displacement of the guide rail 11 within the fixation bracket 13. As shown in Fig. 5, the guide rail 11 comprises a plurality of recesses 111 spaced apart along the extension of the linear track 12. Fig. 5 additionally shows a remote delatching device 184 in the form of a rope, cable or the like that extends inside the C-shaped cross-section of the guide rail 11. The detail structure and function of both the recesses 111 and the remote delatching device 184 will be described with reference to Fig. 12 to Fig. 14 below.

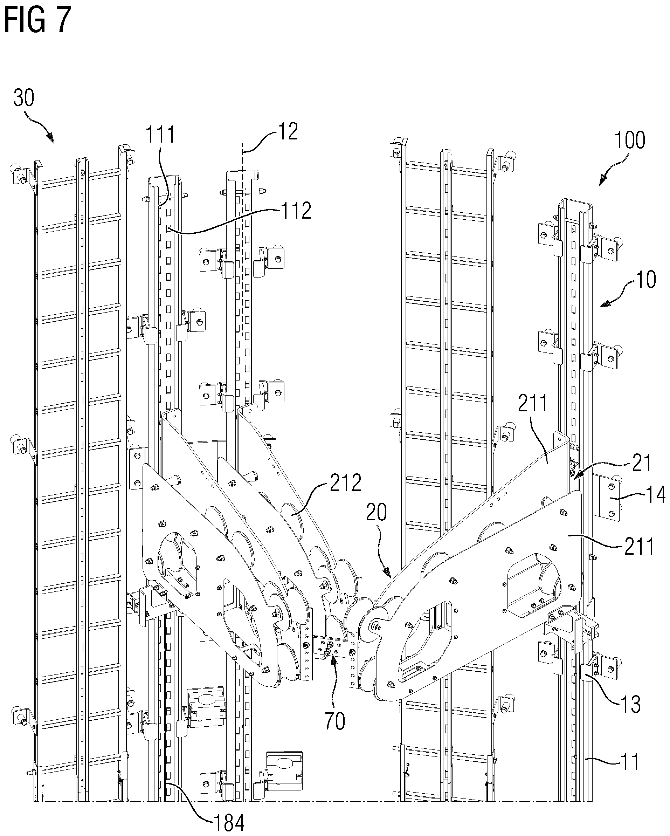

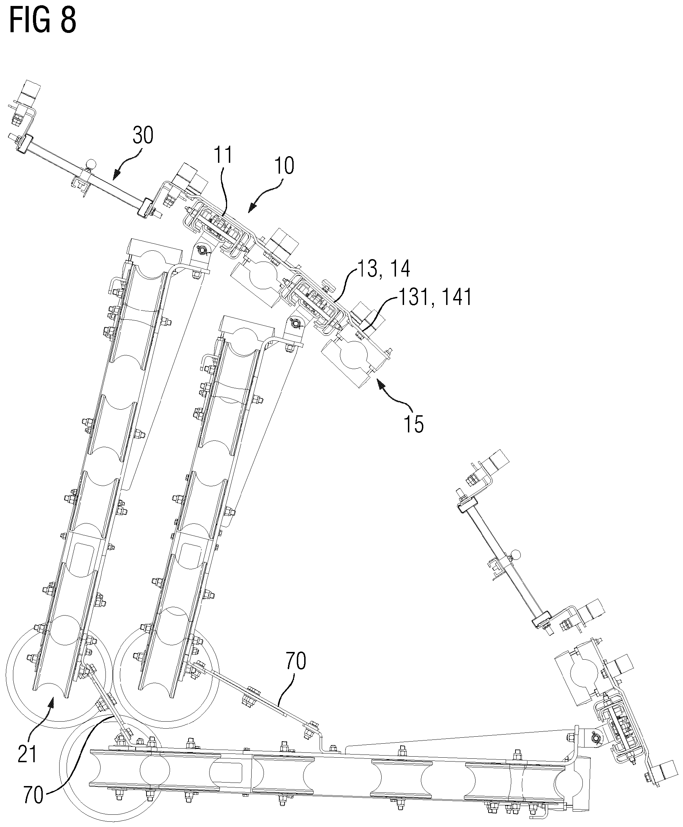

In **Fig. 7****,** that shows a partial view of Fig. 1, and **Fig. 8****,** that shows a corresponding top view two locking brackets 70 are shown that connect the cable support arrangements 20 of neighboring systems 100 to each other in order to lock the pivotability of the cable support arrangements 20 about the swiveling axis. Beneficially, the pivotability may be locked by said locking brackets 70 when the power cables associated with each of the systems 100 are at their desired location. Specifically, the locking brackets 70 may be arranged at the halfwheel assemblies 21 so that the entirety of halfwheel assemblies 21, each of which is pivotally hinged to a corresponding guiding arrangement 10, and the two locking brackets 70 forms a statically determined framework so that the rotational degree of freedom of the cable support arrangements 20 is locked. The locking brackets 70 may in particular be connected to the halfwheel assemblies 21 as a last step of any power cable installation, relocation and/or reconnection procedure when the cable support arrangements 20 are both in their final (axial) position along the linear track 12 and at the desired pivoting angle.

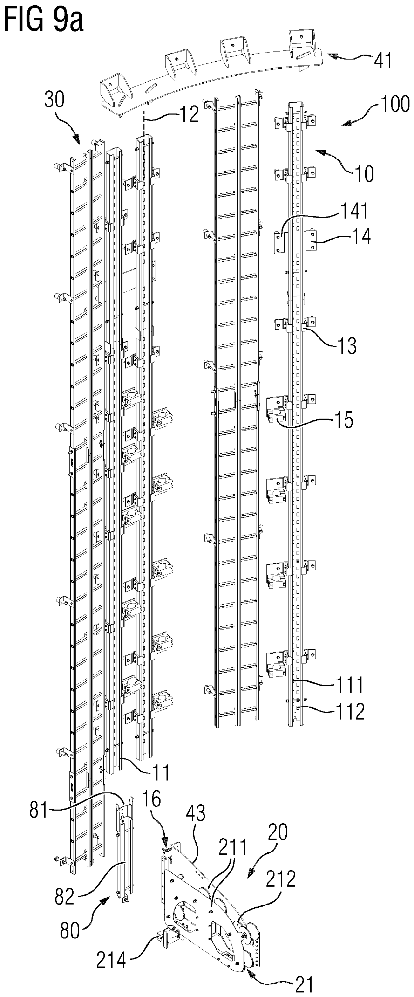

**Fig. 9a** to **Fig. 9d** show isometric views of installation steps of the cable support arrangement 10 at the guiding arrangement 20 that are in particular performed when the system 100 is assembled at the factory and/or in the case of system maintenance on site. In Fig. 9a, the cable support arrangement 20 is not yet connected to the guiding arrangement 10. However, the slider assembly 16 that is to be inserted into the guide rail 11 is already coupled to the cable support arrangement 20 comprising the halfwheel assembly 21. As it will be further explained below, the joint arrangement that provides the pivotability feature for the cable support arrangement 20 is formed between the slider assembly 16 and the halfwheel assembly 21.

Now, in order to install the cable support arrangement 20, the slider assembly 16 is to be inserted into the guide rail 11 so that the latter is received inside the C-shaped cross-section of the guide rail 11. This may be done with or without the help of an insertion tool 80. However, the insertion tool 80 is a quite useful auxiliary means that facilitates this procedure significantly.

The insertion tool 80 has an insertion section 81 with a tapered end that fits over a terminal end of the guide rail 11, for example a lower end of the guide rail 11. Therefore, the dimensions of the cross-section of the insertion section 81 of the insertion tool 80 are larger than the dimensions of the cross-section of the guide rail 11. Specifically, the inner dimensions of the insertion section 81 cross-section may correspond with the outer dimensions of the guide rail 11 cross-section.

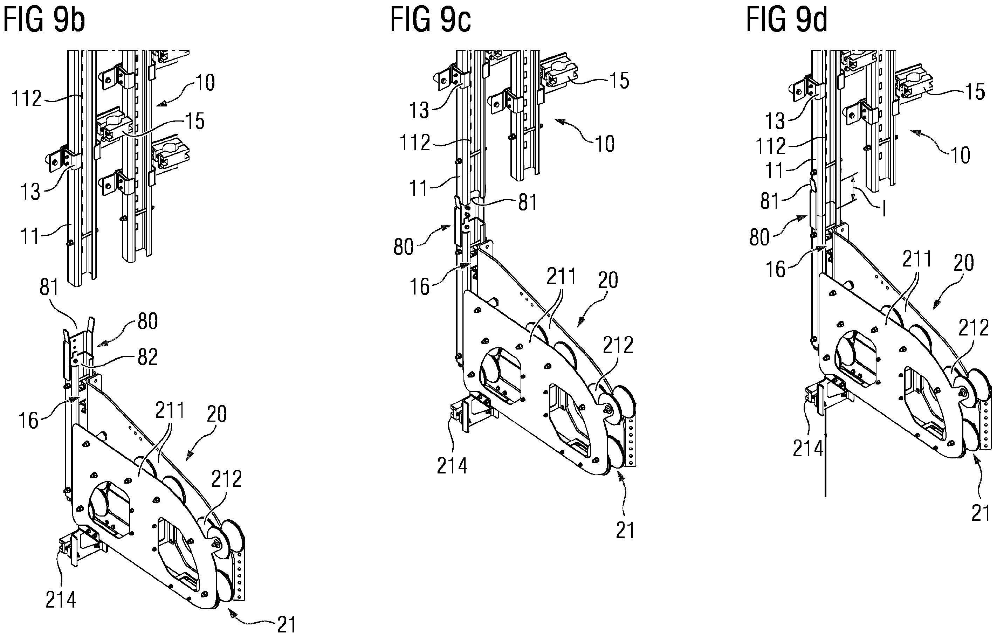

Before the insertion tool 80 is placed on the terminal end of the guide rail 11 the slider assembly 16 is introduced into a guide section 82 of the insertion tool 80 that essentially has the same cross-section as the guide rail 11 and, in other words, forms an axial extension thereof. This is shown in Fig. 9b.

In the following steps, that are shown in Fig. 9c and Fig. 9d, the insertion tool 80 is placed with its in insertion section 81 on the terminal end of the guide rail 11 and pushed along a predefined insertion length l in the axial direction so that the terminal end of the guide rail 11 abuts axially at the guide section 82 of the insertion tool 80. In this inserted state, the insertion tool 80 may be held at the guide rail by means of a force-fitting mechanism or by form-fit locking elements, such as at least one spring tongue.

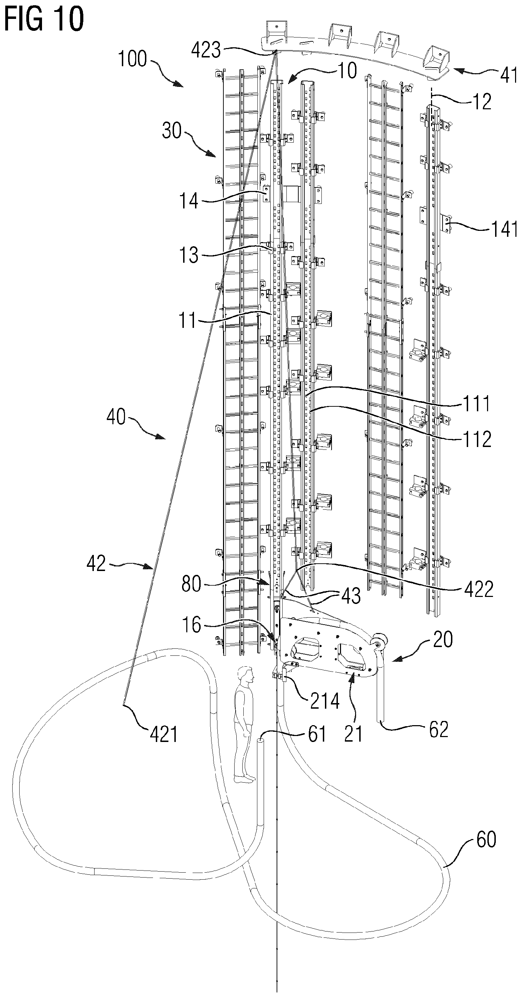

Now referring to **Fig. 10** that shows the system 100 in operation with both a power cable 60 placed on the halfwheel assembly 21 of the cable support system 20 and a hoist 40 for lifting the cable support arrangement 20 in place. The power cable 60 has been routed with its second end 62 through the halfwheel assembly 21 and rests on the contact surfaces provided by the halfwheel assembly 21 that are arranged on the earlier described circle segment 213 (see Fig. 1). The first end 61 of the power cable may already be connected to an electrical system at this stage. In Fig. 10, however, the first end 61 is shown as a free cable end, which doesn't affect the lifting process, though.

The hoist 40 comprises an elongated hoisting element 42 like a rope, chain, cable or the like with a first end 421 and a second end 422. The elongated hoisting element 42 is routed through a hoisting point 423 provided at the hoisting beam 41 above the guide rail 11 with the second end 422 extending downwardly towards the cable support arrangement 20. At the second end 422 the elongated hoisting element 42 is coupled to the halfwheel assembly 21 for a transfer lifting forces. The second end 422 of the elongated hoisting element 42 may be provided with or connected to a lifting traverse that allows to achieve a balanced weight distribution. Specifically, the halfwheel assembly may have one or more holding locations respectively lifting points 43 to that the elongated hoisting element 42 may - either directly or indirectly - be coupled. The lifting points 43 may in particular be equipped with hooks, shackles or the like to connect to the elongated hoisting element 42 and/or a lifting traverse.

The elongated hoisting element 42 may be driven by a motorized hoist drive device, in particular comprising an electric motor. The hoist drive device may in particular comprise a rope drive, chain or cable drive that, in particular, may be battery powered.

Before activation of the hoist drive device the power cable 60 may be locked to the halfwheel assembly 21 so that it doesn't slip when the cable support arrangement 20 is moved, in particular lifted, along the linear track 12. This locking may be done by activating locking member 214 provided at the halfwheel assembly 21. The locking member 214 can in particular comprise a suitable cable clamp.

Upon activation of the hoist drive device the cable support arrangement 20 is moved along the linear track 12 provided by the at least one guide rail 11, for example upwardly, while the movement is guided by the slider assembly 16 accommodated within the guide rail 11. As the power cable 60 is locked to the halfwheel assembly 21 the cable is lifted together with the cable support arrangement 21.

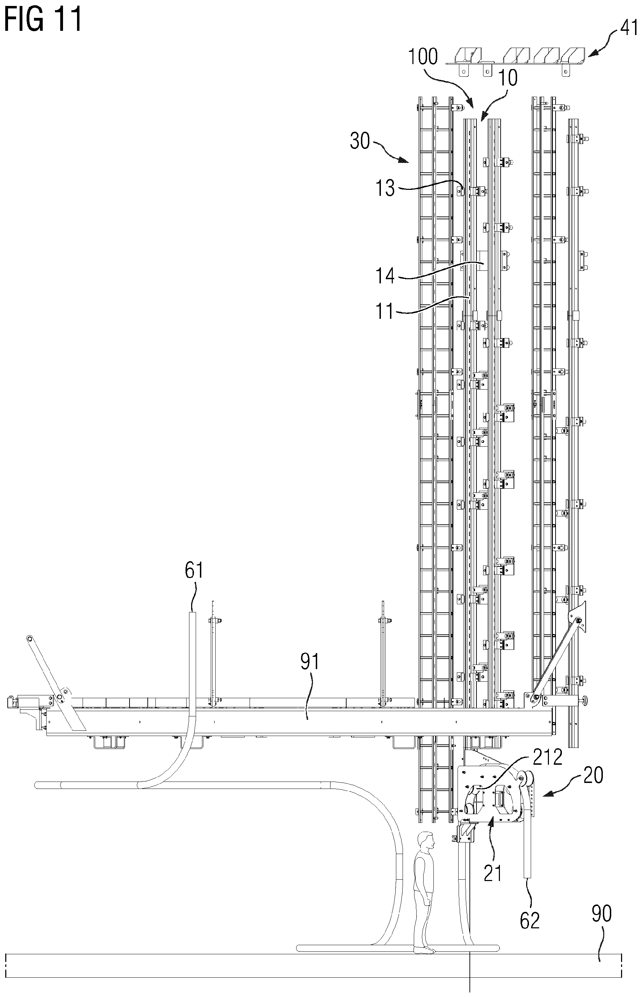

**Fig. 11** additionally shows first and second platforms 90,91 that are arranged inside the wind turbine tower. In the shown setup, the system 100 may be used to lift the power cable 60 from the first platform 90 to the second platform 91, for example to connect it to an electrical system, e.g. a switchgear unit, provided on the second platform 91. It goes without saying that the system 100 may also be used for lowering a power cable 60 from the second platform 91 to the first platform. Generally, the system 100 may be used to lift and/or lower a power cable 60 from one location to another location as needed.

**Fig. 12** shows an enlarged isometric view of the system 100 from a back side, i.e. from the side of the guide rail 11 that in the installed state faces the inner wall of the wind turbine tower. The guide rail 11 comprises a plurality of recesses 111,112 spaced apart along the extension of the linear track 12 that provide form-fit engagement means for a fall-arrester device arranged at the slider assembly 16. A detailed description of the fall-arrester device will be provided below, with reference to Fig. 14 and the subsequent figures. The recesses 111,112 are arranged in two or more laterally spaced rows at the guide rail 11, wherein recesses 111 of a first row of recesses and recesses 112 of a second row of recesses are provided with a predetermined offset o along the extension of the linear track 12. The recesses 111 of the first row of recesses and the recesses 112 of the second row of recesses are in particular be provided with an identical pitch p, i.e. with the same spacing along the extension of the linear track 12.

The recesses are in particular in the form of through-openings, i.e. penetrating the guide rail 11. The recesses 111,112 are in particular slot-shaped with a long axis of their cross-section extending in the direction of the linear track 12.

Fig. 12 also shows two collars 113 of the C-shaped cross-section of the guide rail 11 that are arranged at opposing faces of an open side of the 'C'. These collars 113 hold the slider assembly 16 in the guide rail 11 while allowing components of the joint arrangement 17 (see Fig. 14) to protrude therefrom to connect the halfwheel assembly 21.

In the detail view of **Fig. 13** an engagement of a latching member 181 of the fall-arrester device in one of the recesses 112 of the second row of recesses is shown. The recesses 111,112 each provide at least one form-fit locking surface for a latching member 181 of the fall-arrester device. The fall-arrester device in particular has two separate latching members 181, wherein a first latching member 181 is associated with the first row of recesses 111 and a second latching member 181 is associated with the second row of recesses 112. As the slider assembly 16, at which the fall-arrester device is arranged, is moved along the linear track 12 provided by the guide rail 11 the latching members 181 engage sequentially in adjacent recesses 111,112. This means that the slider assembly 16 can be moved in a first direction, in particular upwardly, whereas a movement in the other direction, in particular downwardly, is blocked by the fall-arrester device. This efficiently helps to avoid the cable support arrangement from free falling which could, as already discussed, cause severe damage to both technical equipment and personnel in the fall area.

**Fig. 14** shows an identical view of Detail B of Fig. 12, however, the guide rail 11 is hidden so that the slider assembly 16 with the fall-arrester device 18 arranged at it can be seen from the back side. The slider assembly 16 comprises a slider base body 161 that can be manufactured from metal, in particular from sheet metal as a welded/bent construction. The slider base body 161 mainly serves to receive operating forces and is guided in the C-shaped cross-section of the guide rail 11 in a mounted state.

To allow for a low-friction movement of the slider assembly 16 along the linear track 12 in the guide rail 11 and to minimize play in the lateral direction the slider assembly 16 comprises two sliding shoes 162 arranged at opposition sides of the slider base body 161. The sliding shoes 162 may in particular be exchangeably coupled to the slider base body 161. The sliding shoes may in particular comprise or consist of a plastic material like Polyoxymethylene (POM), Polytetrafluorethylen (PTFE) or a polyamide. Additionally, the slider base body comprises an interface for the joint arrangement 17 that provides the pivotability feature for the cable support arrangement 20 about the swiveling axis 175.

The joint arrangement 17 comprises a swivel pin 171 arranged at a flange of the slider base body 161 forming a first hinge component. The flange of the slider base body 161 may in particular project essentially in normal direction with respect to the extension of the linear track 12. A second hinge component is provided at the cable support arrangement 20 by a bore 172 within a flange of the halfwheel assembly 21 in that the swivel pin 171 is received. The flange of halfwheel assembly 21 may in particular project essentially in normal direction with respect to the extension of the linear track 12. The flange of the halfwheel assembly 21 may be secured to the slider assembly 16 in the axial direction by a lock nut 173 on the swivel pin 171 and optionally by a safety pin 174 securing the lock nut 173.

The fall-arrester device 18 is arranged at the slider base body 161, for example in an upper region, and comprises two laterally spaced latching members 181 that are pivotably mounted on a shaft 187. The shaft 187 is seated at the slider base body 161, in particular at two opposing side walls. The latching members 181 in particular comprise a latching plate having a cam shape, wherein the width of the latching plate is adapted to a width of the slot-shaped recesses in the guide rail 11 so that it can engage therein.

The latching members 181 are each pre-tensioned by a spring 183 that generates a preload force, in particular a preload torque, that is transmitted to the respective latching member 181. Preferably, the spring 183 is a torsional spring that on one end is supported at the slider base body 161, e.g. in a corresponding hole, and on the other end is supported at the respective latching member 181, e.g. in a corresponding hole or at an external force transmitting surface. The spring 183 allows the latching members 181 to passively engage into the recesses 111,112 and allows the latching members 181 to be pivoted against the preload torque as the slider assembly 161 is moved along the linear track in order to re-generate preload torque to allow for an engagement in a neighboring recess 111,112.

In other words, the preload torque generated by the springs 183 urges the latching members 181 to pivot from a retracted state to a an extended state. In Fig. 14 the latching member 181 shown on the left, i.e. the latching member associated with the second row of recesses 112, is in its extended state whereas the latching member 181 shown on the right is in its retracted state.

The latching members 161 are arranged with a predefined lateral spacing on the shaft 187 that corresponds with the lateral spacing of the recesses 111,112 in the guide rail.

The fall-arrester device 18 further comprises a delatching member 182 that is adapted to transfer the latching members 181 into an inactive state. Inactive state in particular means that the latching members 181 are in their retracted state so that they do not engage the recesses 111,112 in the guide rail 11 when the slider assembly 16 is moved along the linear track 12. The delatching member 182 comprises a delatching plate being pivotably mounted on shaft 187 as well and is activable by rotation, wherein a mechanical link to the latching members 181 transfers a delatching force, in particular a delatching torque, to the latching members 181. In other words, the mechanical link allows the latching members 181 to be entrained by a rotation of the delatching member 182.

The delatching member 182 is activable through a remote delatching device 184 comprising an elongated element 184 like a rope, cable or the like. The elongated element 184 is coupled to the delatching member 182 at a radially offset position with respect to the rotational axis of shaft 187 so that tensioning the elongated element 184 causes the delatching member 182 to rotate and thus to be activated. The elongated element 184 is guided inside the cross-section of the slider base body 161 by one or more routing devices 186 that have a through opening through that the elongated element 184 extends.

On the elongated element 184 one or more stroke limiters 185 may be provided that limit a maximum stroke of the elongated element 184. The stroke limiter 185 in particular comprises a material block that is firmly connected to the elongated element 184 and has a cross section that is larger than a cross-section of the through opening at the routing device 186 so that a stroke of the elongated element 184 is stopped as soon as the stroke limiter 185 abuts at the routing device 186.

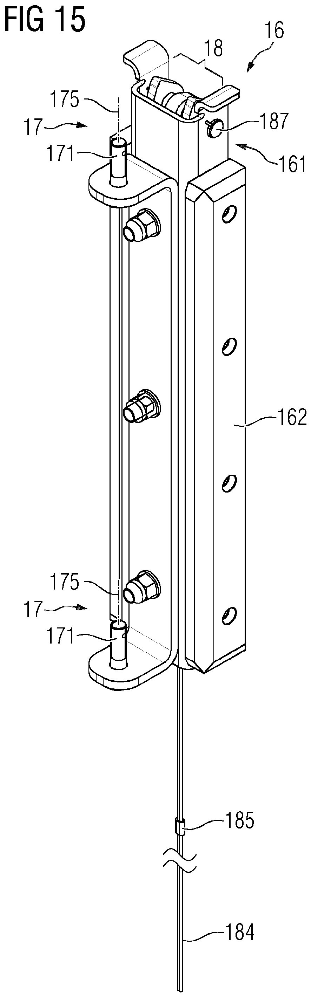

In the isometric view of the slider assembly 16 from a front side of **Fig. 15** it can be seen that the joint arrangement 17 comprises two swivel pins 171 as first hinge components that are arranged at the slider base body 161. Both swivel pins 171 are arranged coaxially on the swiveling axis 175 and have a predetermined spacing along the extension of the linear track 12. The cable support arrangement 20, respectively the halfwheel assembly 21, has corresponding second hinge components, in particular bores as described above with reference to Fig. 14 in that the swivel pins 171 are received.

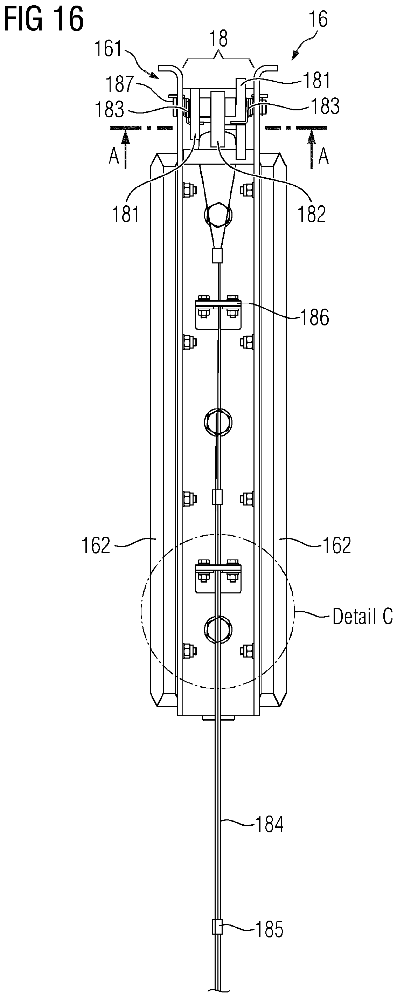

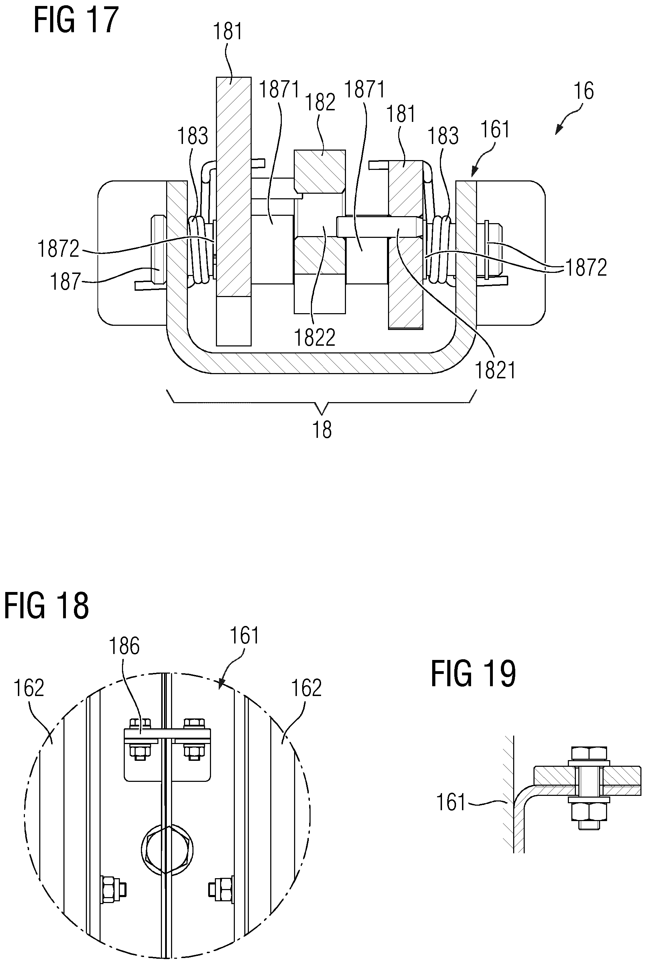

Now referring to **Fig. 16** that shows a rear view of the slider assembly 16, **Fig. 17** that shows cross-section A-A of Fig. 16, **Fig. 18** that shows Detail C according to Fig. 16 and **Fig. 19** that shows cross-section N-N of Fig. 18.

The cross-section of Fig. 17 shows the structure of the fall-arrester device 18 more clearly. The position of the latching members 181 on the shaft 187 is defined by two circlips 1872 that are provided on the shaft 187 at the outer ends of each delatching member 181. This ensures proper alignment between the lateral position of the latching members and the recesses 111,112 in the guide rail 11.

A further circlip 1872 is provided on the shaft 187 on an outer side of the slider base body 161 and holds the shaft 187 in its seated position at the slider base body 161. A distance between the latching members 181 and the delatching member 182 is defined by respective bushings 1871 provided on the shaft 187 and being arranged firstly between a first latching member 182 and the delatching member 182 and secondly between the delatching member 182 and a second latching member 181. Also the mechanical link adapted to transfer the delatching force, in particular the delatching torque, from the delatching member 182 to the latching members 181 is shown. The mechanical link comprises a combination of pins 1821 that are eccentrically arranged at each of the latching members 181 and a curved slot 1822 provided in the delatching member 182 to that the pins 1821 protrude.

Now, when the delatching member 182 is activated by rotation about the axis of the shaft 187 the pins 1821 ultimately will abut at a circumferential end of the curved slot 1822 so that the latching members 181 are entrained accordingly.

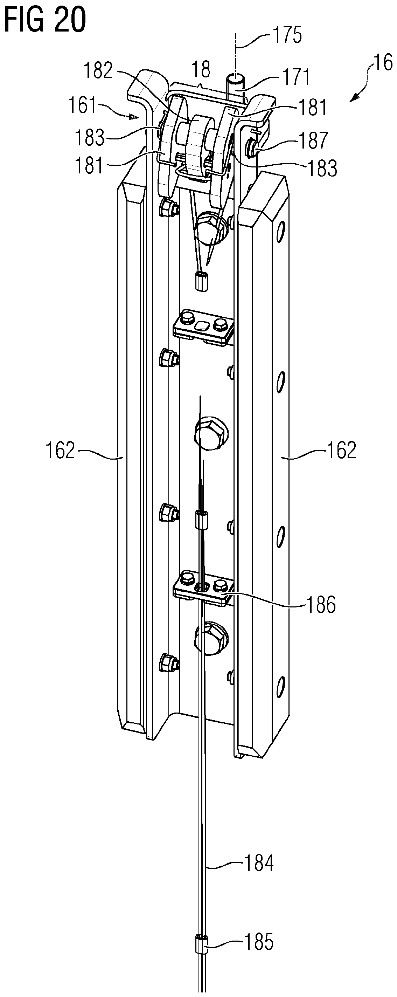

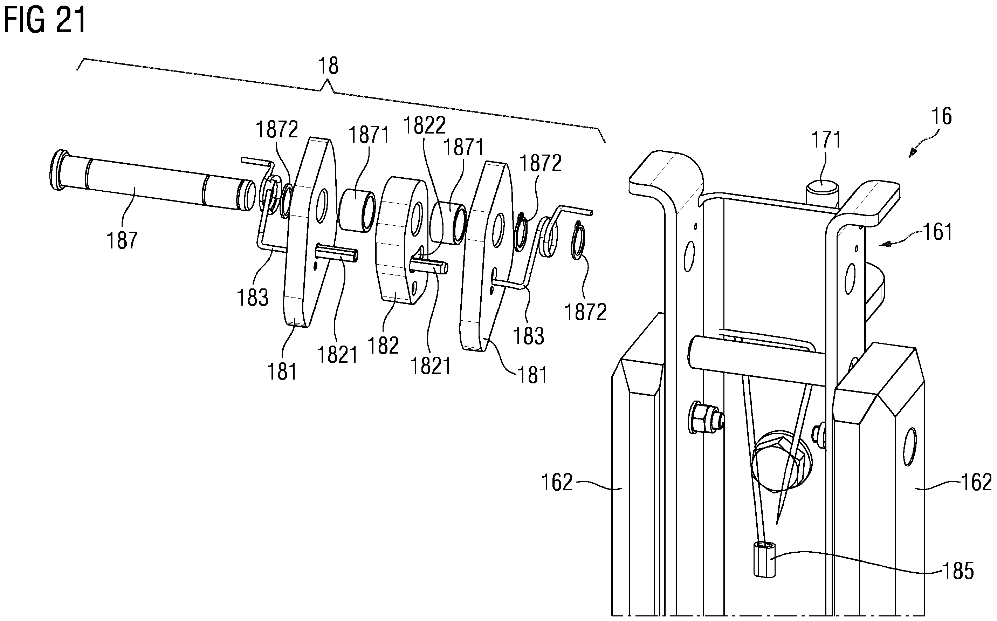

Further reference is made to **Fig. 20** that shows an isometric view of a slider assembly from a rear side and to **Fig. 21** that shows an exploded view of Fig. 20.

On the basis of the exploded view of Fig. 21 the structure and function of the fall-arrester device 18 becomes even clearer. Specifically, the support of the torsional springs 183 at one end at the slider base body 161, in particular in a corresponding hole, and on the other end at the respective latching member 181, in particular in a corresponding eccentric hole, can be seen. In addition, the structure of the mechanical link between the delatching member 182 and the latching members 181 can be observed. There may be one pin 1821 associated with each of the latching members 181 that is firmly received in a corresponding eccentric hole at the respective latching member 181. The pins 1821 extend parallel to the axis of the shaft 187 inwardly towards the delatching member 182 and are received in the curved slot 1822 of the delatching member 182. The extension of the curved slot 1822 along the circumferential direction is dimensioned so that it does not interfere the normal operation of the fall-arrester device 18. In other words, the curved slot 1822 provides sufficient range for movement for the pins 1821 so that the latching members 181 may move undisturbedly from their retracted state to their extended state and vice versa.

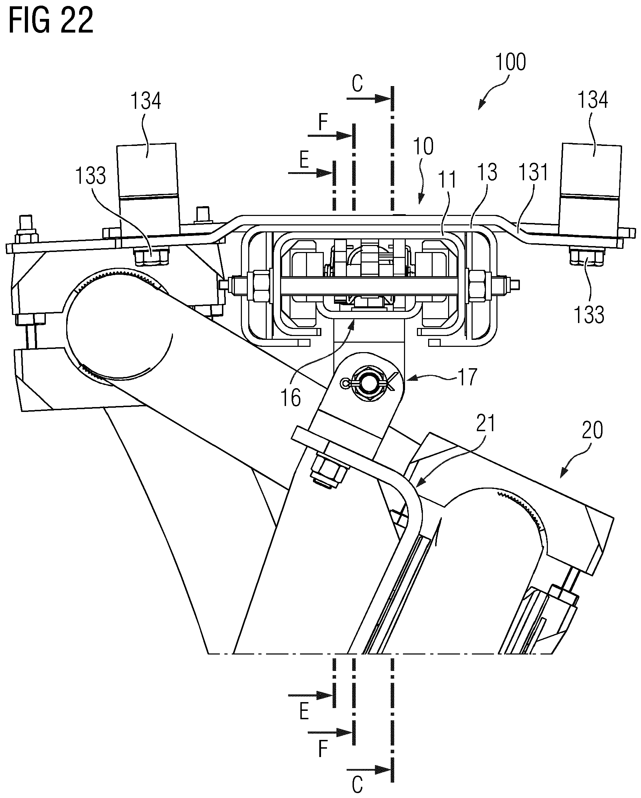

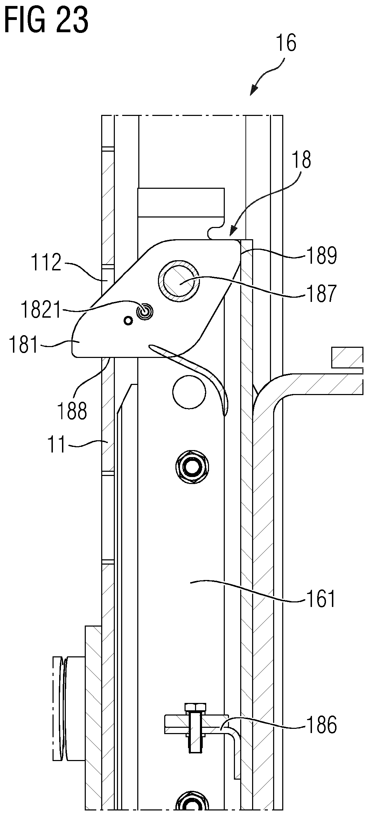

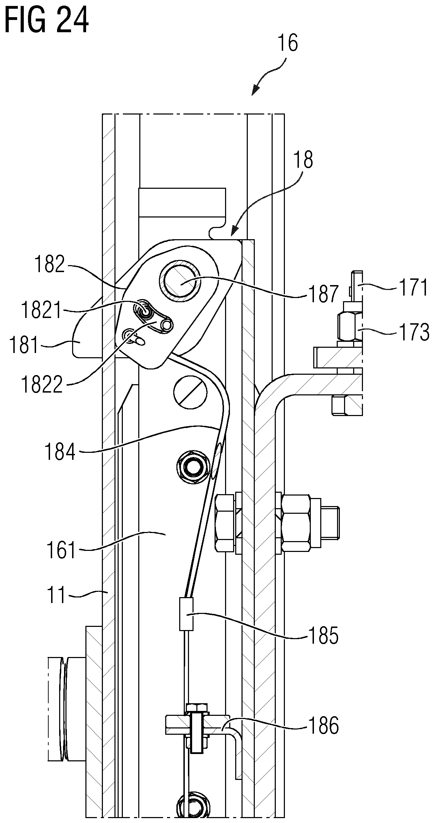

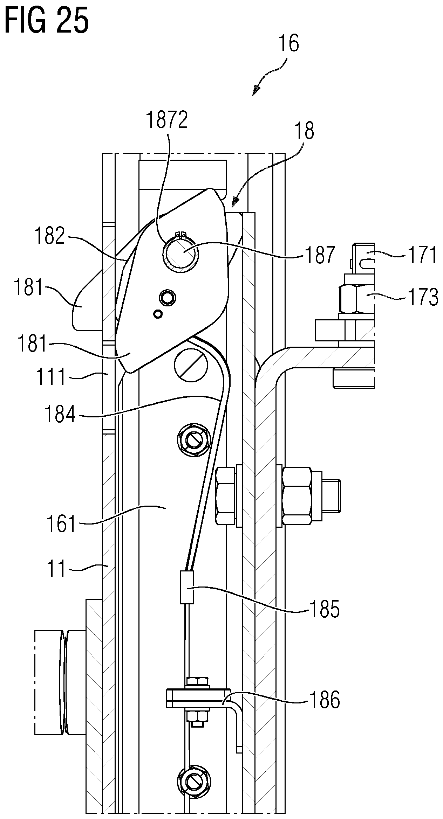

Now referring to **Fig. 22** that shows a further top view of the system 100, to **Fig. 23** that shows cross-section C-C according to Fig. 22, to **Fig. 24** that shows cross-section F-F and to **Fig. 25** that shows cross-section E-E.

In Fig. 23 the sectional plane runs close to the latching member 181 shown in Fig. 22 on the right side that is in its extended state, i.e. currently engages a recess 112 of the second row of recesses of the guide rail 11. In this state, the cam-shaped latching plate of the latching member 181 contacts a first locking surface 188 at the bottom of the recess 112. Thus, the first locking surface 188 provides form-fit engagement for the latching member 181 in the recess 112.

At the slider base body 161 the latching member 181 contacts a second locking surface 189 that prevents the latching member 181 from being rotated further under the influence of an external force acting at the first locking surface 188. In other words, the contact of the latching member 181 at the second locking surface 189 counteracts a torque generated by an external force acting on the latching member 181 at the first locking surface 188. Put simply, the second locking surface 189 provides a rotational stop to the latching member 181. The second locking surface 189 may in particular be provided at a front wall of the slider base body 161.

When the slider assembly 161 is moved along the linear track 12 in an upward direction the latching member 181 will be gradually rotate (in the embodiment shown in Fig. 23 in a counterclockwise direction) until the latching member 181 is in its retracted state in that cam-shaped profile of the latching member 181 is retracted completely behind the wall of the guide rail 11. As soon as the slider assembly 16 has reached a neighboring recess 112 the latching member 181 will, driven by preload torque, engage into that recess 112. Said rotation of the latching member 181 is initiated passively, specifically by the cam-shaped profile of the latching plate having an inclined upper face.

In Fig.24 the sectional plane runs close to the delatching member 182, wherein the earlier described curved slot 1822 that receives the axially inwardly extending pins 1821 arranged at the latching members 181 is visible as well as the connection of the elongated element 184 (remote delatching device) to a connection location at the delatching member 182 that is arranged eccentrically to the axis of the shaft 187. When the elongated element 184 is pulled, a torque that rotates the delatching member 182, in the embodiment of Fig. 24 in a counterclockwise direction, is generated. The latching members 181 are ultimately entrained by the delatching member's 182 rotation.

In Fig. 25 the sectional plane runs close to the latching member 181 shown in Fig. 22 on the left side that is in its retracted state, i.e. currently does not engage a recess 111 of the first row of recesses of the guide rail 11. Instead, the cam-shaped profile of the latching member 181 is retracted behind the wall of the guide rail 11. When the slider assembly 161 is moved along the linear track 12 in an upward direction the latching member 181 will - as soon as the slider assembly 16 has reached a recess 111 - driven by preload torque, engage into that recess 111.

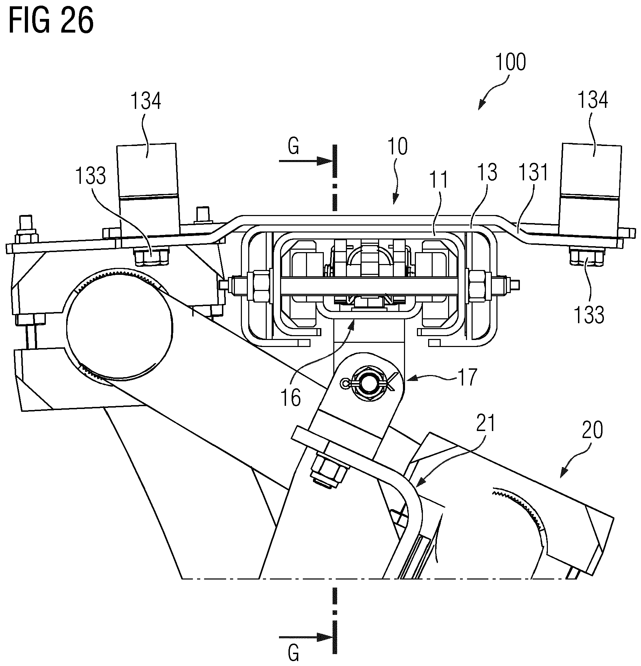

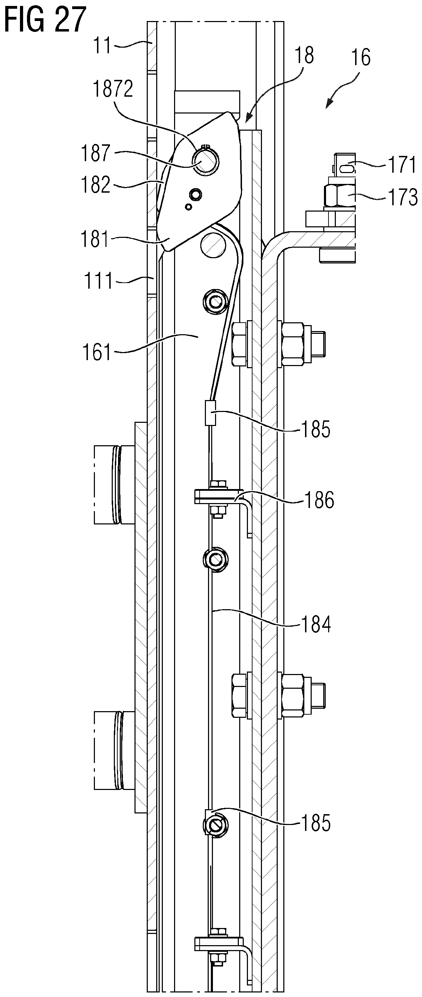

Finally referring to **Fig. 26** that shows yet a further top view of the system 100 and to **Fig. 27** that shows cross-section G-G. In Fig. 27 the sectional plane runs close to the latching member 181 shown in Fig. 26 on the left side. Fig. 27 shows the fall-arrester device 18 with the delatching member 182 activated. As it can be clearly seen, both latching members are in their retracted state, i.e. do not engage into recesses 111,112 of the guide rail 11 so that the slider assembly can be freely moved, e.g. in a downward direction.

Although the present invention has been described in accordance with preferred embodiments, it is obvious for the person skilled in the art that modifications are possible in all embodiments.

### Reference Numerals:

- 100: System for handling a power cable
- 10: Guiding arrangement
- 11: Guide rail
- 111: Recesses of first row
- 112: Recesses of second row
- 113: Collar
- 12: Linear track
- 13: Floating fixation bracket
- 131: Base plate
- 132: Gliding element
- 133: Bolt
- 134: Spacer sleeve
- 14: Fixed fixation bracket
- 141: Base plate
- 15: Cable clamp
- 16: Slider assembly
- 161: Slider base body
- 162: Sliding shoes
- 17: Joint arrangement
- 171: Swivel pin
- 172: Bore
- 173: Lock nut
- 174: Safety pin
- 175: Swiveling axis
- 18: Fall-arrester device
- 181: Latching member
- 182: Delatching member
- 1821: Mechanical link / pin
- 1822: Curved slot
- 183: Spring
- 184: Remote delatching device
- 185: Stroke limiter
- 186: Routing device
- 187: Shaft
- 1871: Bushing
- 1872: Circlip
- 188: First locking surface
- 189: Second locking surface
- 20: Cable support arrangement
- 21: Halfwheel assembly
- 211: Backing plates
- 212: Wheels / rollers
- 213: Circle segment
- 214: Locking member
- 30: Ladder module
- 40: Hoist
- 41: Hoisting beam
- 42: Elongated hoisting element
- 421: Hoisting element first end
- 422: Hoisting element second end
- 423: Hoisting point
- 43: Holding locations / lifting points
- 50: Wind turbine tower
- 51: Inner wall
- 60: Power cable
- 61: Switchgear unit ports
- 62: Power cable first end
- 62: Power cable second end
- 70: Locking brackets
- 80: Insertion tool
- 81: Insertion section
- 82: Guide section
- 90: First platform
- 91: Second platform

- Pᵢ: Swiveled-in position of the cable support arrangement
- Pₒ: Swiveled-out position of the cable support arrangement
- α: Degree of rotational freedom
- l: Insertion length
- p: Recess pitch
- o: Recess offset
- L: Longitudinal axis of the wind turbine tower

## Claims

1. System (100) for handling a power cable (60) of a wind turbine, comprising:
a cable support arrangement (20) adapted to support a portion of the power cable (60), and
at least one guiding arrangement (10) being fixedly connectable or connected to at least one structure (51) within a wind turbine tower (50) and adapted to guide the cable support arrangement (20) along a linear track (12) provided by at least one guide rail (11).

2. System (100) according to claim 1,
wherein the cable support arrangement (20) is coupled to the guiding arrangement (10) in a pivotable manner, in particular wherein the cable support arrangement (20) is pivotable about a swiveling axis (175) extending parallel to the extension of the linear track (12).

3. System (100) according to claim 1 or 2,
wherein the guiding arrangement (10) comprises exactly one guide rail (11), in particular wherein the guide rail (11) is connectable or connected to an inner wall (51) of the wind turbine tower (50), in particular with the linear track (12) having an extension essentially along the longitudinal axis (L) of the wind turbine tower (50).

4. System (100) according to claim 2 or 3,
wherein the guiding arrangement (10) comprises at least one slider assembly (16) coupled to the guide rail (11) and being movable along the extension of the linear track (12), and wherein the slider assembly (16) comprises at least one joint arrangement (17) to that the cable support arrangement (20) is hinged, in particular wherein the joint arrangement (17) provides a degree of rotational freedom (α) for the cable support arrangement (20) about the swiveling axis (175).

5. System (100) according to any of the claims 2 to 4, wherein the cable support arrangement (20) is pivotable between a swiveled-in position (Pᵢ) and a swiveled-out position (Pₒ), in particular wherein in an installed state of the system (100) at the least one structure (51) within a wind turbine tower (50) the cable support arrangement (20) is located closer to the inner wall (51) of the wind turbine tower (50) in the swiveled-out position (Pₒ) than in the swiveled-in position (Pᵢ).

6. System (100) according to claim 4 or 5,
wherein the joint arrangement (17) comprises at least two first hinge components (171) arranged at a slider base body (161) of the slider assembly (16) with a predetermined spacing along an extension of the linear track (12), and wherein the cable support arrangement (20) comprises corresponding second hinge components (172) that are coupled with the first hinge components (171).

7. System (100) according to any of the preceding claims, wherein the guiding arrangement (10) comprises a multitude of fixation brackets (13,14) arranged along the extension of the linear track (12), wherein the fixation brackets (13,14) are adapted to connect the guide rail (11) to the inner wall (51) of the wind turbine tower (50),
in particular wherein at least one fixation bracket (13) provides a floating connection for the guide rail (11) and at least one guiding bracket (14) provides a fixed connection for the guide rail (11) and/or wherein at least one fixation bracket (13,14) includes a cable clamp (15) adapted to clamp the power cable (60) to the at least one fixation bracket (13,14).

8. System (100) according to any of the preceding claims, wherein the guiding arrangement (10) comprises at least one fall-arrester device (18) adapted to engage the guide rail (11) in the event of an accidental fall of the cable support arrangement (20) so that the fall is stopped or at least slowed down.

9. System (100) according to claim 8,
wherein the guide rail (11) comprises a plurality of recesses (111,112) spaced apart along the extension of the linear track (12), the recesses (111,112) providing engagement means for the fall-arrester device (18).

10. System (100) according to claim 9,
wherein the plurality of recesses (111,112) are arranged in at least two laterally spaced rows at the guide rail (11), in particular wherein recesses (111) of a first row of recesses and recesses (112) of a second row of recesses are provided with a predetermined offset (o) along the extension of the linear track (12).

11. System (100) according to any of the claims 8 to 10, wherein the fall-arrester device (18) is arranged at the slider assembly (16) and comprises at least one latching member (181) that engages into the spaced apart recesses (111,112) as the slider assembly (16) is moved along the extension of the linear track (12),
in particular wherein the fall-arrester device (18) comprises at least two laterally spaced apart latching members (181) that engage into the recesses (111,112) of the at least two rows of recesses as the slider assembly (16) is moved along the extension of the linear track (12), wherein preferably always at least one latching member (181) is engaged in at least one recess (111,112) of the first and/or second rows of recesses.

12. System (100) according to claim 11,
wherein the fall-arrester device (18) comprises a delatching member (182) adapted to transfer the at least one latching member (181) into an inactive state in that the slider assembly (16) can be moved along the extension of the linear track (12) without the at least one latching member (181) engaging the recesses (111,112), in particular wherein the delatching member (182) is activable through a remote delatching device (184), in particular comprising an elongated element.

13. Wind turbine, comprising:
a wind turbine tower (50),
a power cable (60),
and a system (100) for handling a power cable (60) according to any of the preceding claims arranged inside the tower (50) with the linear track (12) running essentially along a longitudinal axis (L) of the tower (50).

14. Wind turbine according to claim 13,
wherein the at least one guide rail (11) of the guiding arrangement (10) of the system (100) for handling a power cable (60) is connected to an inner wall (51) of the wind turbine tower (50).

15. Wind turbine (100) according to claim 14,
comprising two or more systems (100) for handling a power cable (60), wherein the respective guide rails (11) of the guiding arrangements (10) are placed with a predetermined spacing along a circumferential direction at the inner wall (51) of the wind turbine tower (50).
